# EUROPÄISCHE PATENTSCHRIFT

(11) **EP 0 442 392 B1**
(45) Veröffentlichungstag und Bekanntmachung des Hinweises auf die Patenterteilung: **09.11.1994**
(21) Anmeldenummer: 91101780.4
(22) Anmeldetag: 08.02.1991
(51) Int. Cl.: B60C 27/06, B60C 27/10

(54) **Gleitschutzkette**
Antislip chain
Chaine anti-derapante

(30) Priorität: 16.02.1990 DE 9001871 U
(43) Veröffentlichungstag der Anmeldung: 21.08.1991
(73) Patentinhaber: OBERLAND-Schneeketten Anton Mangold, 82467 Garmisch-Partenkirchen (DE)
(72) Erfinder: Mangold, Christian, D-8116 Eschenlohe (DE)
(74) Vertreter: Heim, Hans-Karl, Dipl.-Ing.

(56) Entgegenhaltungen:
- EP-A- 0 060 804
- DE-U- 8 603 865
- DE-U- 8 807 601
- DE-U- 8 911 036

## Beschreibung

Die Erfindung betrifft eine Gleitschutzkette nach dem Oberbegriff des Anspruchs 1. Eine Gleitschutzkette der gattungsgemäßen Art ist aus dem deutschen Gebrauchsmuster 82 09 399 bekannt. In dieser Schrift ist eine Gleitschutzkette für ein Fahrzeugrad beschrieben, die einen auf der Innenseite des Fahrzeugrades angeordneten flexiblen Montagering aufweist, an dem ein Spurnetz angebracht ist und der an einer Stelle offen ist. Die an der offenen Stelle einander zugewandten freien Enden des Montagerings weisen Umlenkteile mit Kettenführungsrollen auf, in denen eine Spannkette befestigt und geführt ist. Durch Anziehen der Spannkette werden die beiden Umlenkteile aufeinander zugespannt, wodurch der Montagering eine gute Anlage der Kettenstrangabschnitte auf der Lauffläche des Fahrzeugrads bewirkt. Die Spannkette wird über die Lauffläche anschließend auf die Außenseite des Rades geführt und dort befestigt.

Aus der US-PS 3,884,283 ist eine Gleitschutzkette für Fahrzeugreifen beschrieben, die sowohl auf der Innen- als auch auf der Außenseite des Fahrzeugrades angeordnete Halterungen in Form eines Kettenstrangs aufweist. Die einander zugewandten offenen Enden dieser Kettenstränge sind durch eine Spanneinrichtung mittels eines Spannstranges miteiander verbunden, wobei der Spannstrang eine feste Anlage der Halterungen auf beiden Seiten des Reifens gewährleistet.

Schließlich ist aus der EP 60 803 B1 eine Gleitschutzkette bekannt, die einen an der Innenseite des Fahrzeugreifens angeordneten Spannbügel aufweist, der an der inneren Seitenflanke des Reifens anliegt. Die einander zugewandten Enden des Spannbügels weisen Umlenkteile auf, zwischen denen eine Spannkette befestigt und geführt ist. Die Spannkette wird dabei mit einem Ende an einem ersten Umlenkteil befestigt, dann durch eine Führung des zweiten Umlenkteils hindurchgefädelt und durch eine im ersten Umlenkteil ausgebildete Führung auf die Außenseite des Fahrzeugreifens geführt, wo die Spannkette schließlich befestigt wird.

Bei allen vorbekannten Gleitschutzketten sind zwei verschiedene Umlenkteile vorgesehen, die teilweise mit drehbaren Führungsrollen für den Spannstrang oder die Spannkette versehen sind. Die Herstellung dieser Umlenkteile ist in der Regel relativ teuer. Zudem besteht bei der Verwendung von drehbaren Führungsrollen die Gefahr der Verschmutzung und der Beeinträchtigung der Funktion des entsprechenden Umlenkteils. Bei Verschleiß aufgrund häufiger Benutzung der Gleitschutzkette ist ein Auswechseln der Umlenkteile in der Regel relativ aufwendig.

Es ist **Aufgabe** der Erfindung, eine Gleitschutzkette der gattungsgemäßen Art zu schaffen, die kostengünstig herstellbar und einfach zu handhaben ist. Zusätzlich soll unter Beibehaltung einer hohen Betriebssicherheit ein schneller und unkomplizierter Austausch von Verschleißteilen im Bereich der Spanneinrichtung möglich sein.

Diese Aufgabe wird bei einer Gleitschutzkette der gattungsgemäßen Art erfindungsgemäß durch die kennzeichnenden Merkmale des Anspruchs 1 gelöst. Vorteilhafte Weiterbildungen sind Gegenstand der Unteransprüche.

Durch die Verwendung von identischen Umlenkteilen, die als Kunststoff-Spritzgußteile ausgebildet sind, werden die Fertigungskosten für die Spanneinrichtung wesentlich verringert. Jedes Umlenkteil weist Aussparungen auf, die sowohl eine Führung der Spanneinrichtung als auch ein Festlegen eines Endes der Spanneinrichtung ermöglichen. Es ist somit nicht notwendig, ein Umlenkteil zu konzipieren, das zum Festlegen des Endes der Spanneinrichtung ausgebildet ist und ein anderes Umlenkteil zu konzipieren, das die Spanneinrichtung lediglich umlenkt, um nach dem Flaschenzugprinzip eine Spannkraft zwischen den beiden Umlenkteilen aufbringen zu können.

Durch die Verwendung von Kunststoff-Spritzgußteilen für die Umlenkteile wird deren Verschleiß beträchtlich verringert, was sich positiv auf die Lebensdauer der Gleitschutzkette auswirkt.

Wenn die Spanneinrichtung durch eine Spannkette gebildet ist, ist in jedem Umlenkteil eine zylinderförmige Aussparung vorhanden, die eine schlitzförmige Aussparung zur Aufnahme des Endgliedes der Spannkette durchsetzt. Nach Einsatz des Endglieds der Spannkette in die schlitzförmige Aussparung wird in die zylinderförmige Aussparung ein Bolzen eingeschoben, der das Endglied der Spannkette gegen ein Herausgleiten aus der schlitzförmigen Aussparung sichert. Das Endglied der Spannkette ist somit sicher an dem Umlenkteil festgelegt.

In einer vorteilhaften Weiterbildung der Erfindung sind die Umlenkteile an der Halterung lösbar befestigt, was einen problemlosen und unkomplizierten Austausch der Umlenkteile im Falle von Verschleiß oder Zerstörung dieser Teile ermöglicht.

Die Halterung der Gleitschutzkette ist in der Regel als Federstahlbügel ausgebildet, wobei die Enden des Federstahlbügels jeweils einen Zapfen zum Festlegen eines Kettenstrangabschnitts und des Umlenkteils aufweisen. Eine sichere und lösbare Befestigung des Umlenkteils an dem Federstahlbügel wird dadurch erreicht, daß der Kettenstrangabschnitt mit dem Zapfen über mindestens ein längliches Verbindungsteil verbunden ist, das an seinen Längsenden den Zapfen und das Endglied des Kettenstrangabschnitts umgreift, wobei in dem Umlenkteil eine Aussparung ausgebildet ist, die von dem Verbindungsteil durchsetzt wird. Die bezüglich des Fahrzeugrades radial gerichtete Zugkraft des Kettenstrangabschnitts wird somit vollständig über das Verbindungsstück auf die Halterung übertragen, während die in Umfangsrichtung wirkende Zugkraft zwischen den Umlenkteilen von dem Zapfen und dem Verbindungsteil auf das Umlenkteil übertragen wird.

Vorzugsweise sind zwei Verbindungsteile in Form von zwei Profilblechstreifen vorgesehen, die an ihrem einen Längsende eine Durchbohrung für den Zapfen der Halterung aufweisen und die an ihrem anderen Längsende eine Durchbohrung für das Endglied des Kettenstrangabschnitts aufweisen. Ein Blechstreifen liegt dabei an der vom jeweils anderen Umlenkteil entfernten Rückwand des Umlenkteils an, während der andere Profilblechstreifen die in dem Umlenkteil ausgebildete Aussparung durchsetzt. Die Rückwand des Umlenkteils wird demnach durch beide Profilblechstreifen umgriffen, weshalb die Profilblechstreifen im Bereich des Zapfens und der Aussparung in dem Umlenkteil um die Dicke der Rückwand des Umlenkteils beabstandet sind. Im Bereich der Durchbohrung für das Endglied des Kettenstrangabschnitts sind die Profilblechstreifen aufeinanderzu gekröpft und liegen aneinander an. Durch ein Ablösen der aneinanderliegenden Längsenden der Profilblechstreifen von dem Endglied des Kettenstrangabschnitts kann ein Profilblechstreifen relativ zu dem anderen Profilblechstreifen an dem als Drehzapfen ausgebildeten Zapfen der Halterung verdreht werden, so daß sich das Umlenkteil problemlos entfernen läßt, falls dies beschädigt oder verschlissen ist.

Das oder die Verbindungsteil(e) kann/können auch in der Art eines Karabiners lösbar an dem Endglied des Kettenstrangabschnitts befestigt sein, was ohne ein Aufbiegen des Endglieds des Kettenstrangabschnitts ein Loslösen des Verbindungsteils vom Kettenstrangabschnitt ermöglicht und damit das Herauslösen des Umlenkteils von der Gleitschutzkette.

Der Austausch des Umlenkteils kann von jeder Werkstatt durchgeführt werden. Ein Einsenden der Gleitschutzkette im Falle eines Verschleißes des Umlenkteils zum Hersteller ist nicht mehr notwendig.

Die Erfindung wird nachfolgend beispielsweise in der schematischen Zeichnung beschrieben.

Diese zeigt einen Ausschnitt aus einer Gleitschutzkette im Bereich der beiden Enden der Halterung mit der Spanneinrichtung.

Die Gleitschutzkette hat auf der der Fahrzeugmitte zugewandten Innenseite des Fahrzeugreifens eine als Federstahlbügel 10 ausgebildete Halterung für sich über die Lauffläche des Reifens erstreckende Kettenstrangabschnitte 12. Die Längsenden des Federstahlbügels 10 weisen jeweils einen Drehzapfen 14 auf, der zur Halterung eines Kettenstrangabschnitts 12 und eines Umlenkteils 16,17 dient. Die beiden Umlenkteile 16,17 an den beiden Enden des Federstahlbügels 10 sind identisch und als Kunststoff-Spritzgußteil ausgebildet. Die Kettenstrangabschnitte 12 sind an den Drehzapfen 14 mittels jeweils zweier Profilblechstreifen 18,20 festgelegt, die an ihrem der Radmitte zugewandten Längsende den Drehzapfen 14 und an ihrem der Fahrzeugradmitte abgewandten Längsende das Endglied 22 des Kettenstrangabschnitts 12 umgreifen. Die beiden Profilblechstreifen 18,20 sind in ihrem unteren Bereich voneinander beabstandet und umfassen auf diese Weise die dem jeweils anderen Umlenkteil 16,17 abgewandte Rückwand 24 des Umlenkteils 17,16. An der Unterseite der Rückwand 24 des Umlenkteils 16,17 ist weiterhin eine Aussparung 26 vorgesehen, die ein Aufschieben des Umlenkteils auf den Drehzapfen 14 ermöglicht.

Durch das Aufbiegen des Endglieds 22 des Kettenstrangabschnitts 12 kann der hintere Profilblechstreifen 20 relativ zum vorderen, das Umlenkteil 16 durchsetzenden Profilblechstreifen 18 verdreht werden, so daß das Umlenkteil 16,17 von der Gleitschutzkette entfernt und ausgewechselt werden kann.

Die Umlenkteile 16,17 haben eine große, bezüglich des Fahrzeugrades radial gerichtete Aussparung 28, durch die eine Spannkette 30 geführt ist und die weiterhin von dem vorderen Profilblechstreifen 18 durchsetzt wird. In dieser Aussparung 28 kommt auch der verbreiterte Kopf 32 des Drehzapfens 14 zu liegen, der somit eine gute Übertragung der Zugkräfte zwischen den Umlenkteilen 16,17 und dem Federstahlbügel 10 gewährleistet. Jedes Umlenkteil 16,17 hat an seinem dem jeweils anderen Umlenkteil 17,16 zugewandten Ende eine bezüglich des Fahrzeugrades radial verlaufende zylindrische Aussparung 34, die eine schlitzförmige Aussparung 36 zur Aufnahme des Endgliedes 38 der Spannkette 30 durchsetzt. Das Endglied 38 der Spannkette 30 wird in den Schlitz 36 des Umlenkteils 16 eingeschoben, wonach ein Sicherungsstift oder Sicherungsbolzen 40 in die zylinderförmige Aussparung 34 eingeschoben wird. Dieser Sicherungsstift 40 bewirkt ein sicheres Festlegen des Endgliedes 38 der Spannkette 30 an dem Umlenkteil 16.

Die Spannkette 30 ist hierdurch an dem einen Umlenkteil 16 festgelegt und wird durch die mit einer Führungsbahn 42 versehene Aussparung 28 des anderen Umlenkteils 17 und anschließend durch die eigene Aussparung 28 hindurchgeführt und über die nicht dargestellte Lauffläche des Fahrzeugreifens auf dessen Außenseite geleitet.

Auf diese Weise wird der Federstahlbügel 10 problemlos und effektiv verspannt, wobei alle Teile der Spanneinrichtung sehr kostengünstig herstellbar sind.

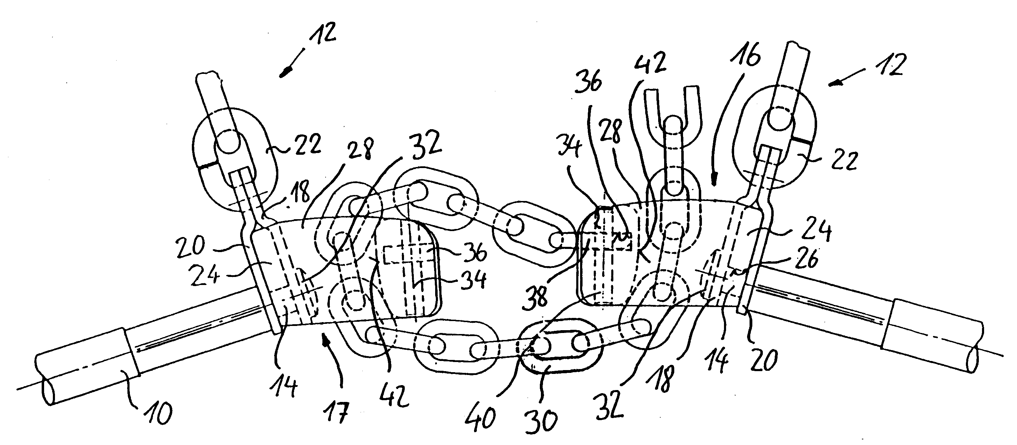

## Patentansprüche

1. Gleitschutzkette für Fahrzeugreifen
mit einer zur Anlage an die Innenseite des Reifens vorgesehenen Halterung für sich über die Lauffläche des Reifens erstreckende Kettenstrangabschnitte, wobei die beiden Enden der Halterung Umlenkteile für eine Spanneinrichtung zum Festspannen der Halterung aufweisen,
dadurch **gekennzeichnet,**
daß beide Umlenkteile (16, 17) identisch ausgebildet sind und
daß jedes Umlenkteil (16, 17) einstückig ist und mindestens eine Aussparung (34) für den Einsatz eines Sicherungselements (40) zum Festlegen eines Endes (38) der Spanneinrichtung (30) aufweist.

2. Gleitschutzkette nach Anspruch 1,
dadurch **gekennzeichnet**,
daß in dem Umlenkteil (16,17) eine zylinderförmige Aussparung (34) für einen Sicherungsbolzen (40) und eine schlitzförmige Aussparung (36) für ein Endglied (38) einer Spannkette (30) vorgesehen sind.

3. Gleitschutzkette nach Anspruch 1 oder 2,
dadurch **gekennzeichnet**,
daß die Umlenkteile (16,17) lösbar an der Halterung (10) befestigt sind.

4. Gleitschutzkette nach einem der vorhergehenden Ansprüche
mit einer als Federstahlbügel (10) ausgebildeten Halterung, deren Enden einen Zapfen (14) zum Festlegen eines Kettenstrangabschnitts (12) und des Umlenkteils (16,17) aufweisen,
dadurch **gekennzeichnet**,
daß der Kettenstrangabschnitt (12) mit dem Zapfen (14) über mindestens ein längliches Verbindungsteil (18,20) verbunden ist, dessen Längsenden den Zapfen (14) und das Endglied (22) des Kettenstrangabschnitts (12) umgreifen und
daß das Umlenkteil (16,17) eine Aussparung (28) aufweist, die von dem Verbindungsteil (18) durchsetzbar ist.

5. Gleitschutzkette nach Anspruch 4,
dadurch **gekennzeichnet**,
daß das Verbindungsteil aus zwei Profilblechstreifen (18,20) besteht, die im Bereich des Zapfens (14) und der Aussparung (28) voneinander beabstandet sind und eine Wand (24) des Umlenkteils (16,17) umschließen.

6. Gleitschutzkette nach Anspruch 5,
dadurch **gekennzeichnet**,
daß die Profilblechstreifen (18,20) an ihrem dem Endglied (22) des Kettenstrangabschnitts (12) zugewandten Ende aufeinanderzu gekröpft sind.

7. Gleitschutzkette nach Anspruch 5 oder 6,
dadurch **gekennzeichnet**,
daß zumindest ein Profilblechstreifen (18,20) von dem Endglied (22) des Kettenstrangabschnitts (12) lösbar ist.

8. Gleitschutzkette nach einem der Ansprüche 4 bis 7,
dadurch **gekennzeichnet**,
daß in dem Umlenkteil (16,17) eine gemeinsame Aussparung (28) für das Verbindungsteil (18) und zur Durchführung der Spanneinrichtung (30) vorgesehen ist.

9. Gleitschutzkette nach einem der Ansprüche 4 bis 8,
dadurch **gekennzeichnet**,
daß das Umlenkteil (16,17) eine dem jeweils anderen Umlenkteil (17,16) abgewandte Rückwand (24) aufweist, die von den Verbindungsteilen (18,20) umgriffen wird.

10. Gleitschutzkette nach einem der vorhergehenden Ansprüche,
dadurch **gekennzeichnet**,
daß das Umlenkteil (16,17) im Spritzgußverfahren hergestellt ist.

## Claims

1. Non-skid chain for a vehicle tyre with a mounting support provided for engagement on the inside of the tyre for chain strand portions extending over the tyre tread, the two ends of the mounting support having reversing parts for a holding device for holding the mounting support, characterized in that both reversing parts (16, 17) have an identical construction and that each reversing part (16, 17) is in one piece and has at least one recess (34) for the insertion of a safety member (40) for fixing one end (38) of the holding device (30).

2. Non-skid chain according to claim 1, characterized in that in the reversing part (16, 17) is provided a cylindrical recess (34) for a safety bolt (40) and a slot-like recess (36) for an end link (38) of an anchoring chain (30).

3. Non-skid chain according to claim 1 or 2, characterized in that the reversing parts (16, 17) are detachably fixed to the mounting support (10).

4. Non-skid chain according to one of the preceding claims with a mounting support constructed as a spring steel clip (10) and whose ends have a stud (14) for fixing a chain strand portion (12) and the reversing part (16, 17), characterized in that the chain strand portion (12) is connected to the stud (14) by means of at least one elongated connecting part (18, 20), whose longitudinal ends engage round the stud (14) and the end link (22) of the chain strand portion (12) and that the reversing part (16, 17) has a recess, which is traversable by the connecting part (18).

5. Non-skid chain according to claim 4, characterized in that the connecting part comprises two profile sheet metal strips (18, 20), which are spaced from one another in the vicinity of the stud (14) and the recess (18) and surround a wall (24) of the reversing part (16, 17).

6. Non-skid chain according to claim 5, characterized in that the profile sheet metal strips (18) are offset towards one another at the end thereof facing the end link (22) of the chain strand portion (12).

7. Non-skid chain according to claim 5 or 6, characterized in that at least one profile sheet metal strip (18, 20) is detachable from the end link (22) of the chain strand portion (12).

8. Non-skid chain according to one of the claims 4 to 7, characterized in that in the reversing part (16, 17) is provided a common recess (28) for the connecting part (18) and for the passage of the holding device (30).

9. Non-skid chain according to one of the claims 4 to 8, characterized in that the reversing part (16, 17) has a rear wall (24) remote from the other reversing part (17, 16) and around which engages the connecting parts (18, 20).

10. Non-skid chain according to one of the preceding claims, characterized in that the reversing part (16, 17) is produced in an injection moulding process.

## Revendications

1. Chaîne à neige pour pneumatiques de véhicules, comprenant une monture prévue pour s'appliquer contre la face intérieure du pneumatique, et destinée à recevoir des segments de brins de chaîne qui s'étendent sur la surface de roulement du pneumatique, les deux extrémités de la monture présentant des éléments de renvoi coopérant avec un dispositif de serrage destiné à tendre la monture, ***caractérisée en ce que*** les deux éléments de renvoi (16, 17) sont de configuration identique, en ce que chaque élément de renvoi (16, 17) est d'une seule pièce et présente au moins un évidement (34) pour le montage d'un élément de sécurité (40) destiné à fixer une extrémité (38) du dispositif de serrage (30).

2. Chaîne à neige selon la Revendication 1, ***caractérisée en ce que*** dans l'élément de renvoi (16, 17), sont prévus un évidement cylindrique (34) destiné à recevoir une vis de fixation (40), et un évidement (36) en forme de fente destiné à recevoir un maillon terminal (38) d'une chaîne de serrage (30).

3. Chaîne à neige selon la Revendication 1 ou 2, ***caractérisée en ce que*** les éléments de renvoi (16, 17), sont fixés à la monture (10) par une liaison démontable.

4. Chaîne à neige selon une des Revendications précédentes, comprenant une monture ayant la forme d'un arceau (10) en acier à ressorts, dont les extrémités présentent un tourillon (14) pour la fixation d'un segment (12) de brin de chaîne et de l'élément de renvoi (16, 17), ***caractérisée en ce que*** le segment (12) de brin de chaîne qui porte le tourillon (14) est relié par l'intermédiaire d'au moins un élément de liaison (18, 20) de forme allongée, dont les extrémités de la longueur embrassent le tourillon (14) et le maillon final (22) du segment de brin de chaîne (12), et en ce que l'élément de renvoi (16, 17) présente un évidement (28) qui peut être traversé par l'élément de liaison (18).

5. Chaîne à neige selon la Revendication 4, ***caractérisée en ce que*** l'élément de liaison est composé de deux bandes (18, 20) qui sont espacées l'une de l'autre dans la région du tourillon (14) et de l'évidement (28) et qui entourent une paroi (24) de l'élément de renvoi (16, 17).

6. Chaîne à neige selon la Revendication 5, ***caractérisée en ce que*** les bandes de tôles profilées (18, 20) sont contre-coudées l'une vers l'autre à leur extrémité qui est dirigée vers le maillon terminal (22) du segment du brin de chaîne (12).

7. Chaîne à neige selon les Revendications 5 ou 6, ***caractérisée en ce qu***'au moins une bande de tôle profilée (18, 20) peut être détachée du maillon terminal (22) du segment de brin de chaîne (12).

8. Chaîne à neige selon une des Revendications 4 à 7, ***caractérisée en ce que***, dans l'élément de renvoi (16, 17) est prévu un évidement (28) pour l'élément de liaison (18) et pour le passage du dispositif de serrage (30).

9. Chaîne à neige selon une des Revendications 4 à 8, ***caractérisée en ce que*** l'élément de renvoi (16, 17) présente une paroi arrière (24) qui est à l'opposé de l'autre élément de renvoi (17, 16), et qui est encadrée par les éléments de liaison (18, 20).

10. Chaîne à neige selon une des Revendications précédentes, ***caractérisée en ce que*** l'élément de renvoi (16, 17) est fabriqué par un procédé de moulage par injection.
